# EUROPÄISCHE PATENTANMELDUNG

(11) **EP 1 923 515 A2**
(43) Veröffentlichungstag der Anmeldung: **21.05.2008**
(21) Anmeldenummer: 07022084.3
(22) Anmeldetag: 14.11.2007
(51) Int. Cl.: E03F 7/04

(54) **Sicherheitsschacht für Niederschlags-Grossereignisse; und Schachtanordnung**

(30) Priorität: 15.11.2006 DE 202006017409 U
(71) Anmelder: Gervink, Gregor, 48565 Steinfurt (DE)
(72) Erfinder: Gervink, Gregor, 48565 Steinfurt (DE)
(74) Vertreter: Habbel, Ludwig

(57) **Zusammenfassung**

Die Erfindung betrifft einen Abwasserschacht (1), mit
• einer durch den Abwasserschacht (1) verlaufenden, Abwasser führenden Abwasser-Hauptleitung (4),
welche wenigstens Abwasser in den Abwasserschacht (1) einführt und sowohl Abwasser als auch Regenwasser aus dem Abwasserschacht (1) herausführt,
• einer Regenwasser in den Abwasserschacht (1) führenden Leitung (3),
• einer die Abwasser-Hauptleitung (4) automatisch entweder freigebenden oder versperrenden Rückstauklappe (6),
welche dort in der Abwasser-Hauptleitung (4) vorgesehen ist, wo diese sowohl Abwasser als auch Regenwasser führt,
• einer eine Saugseite und eine Druckseite aufweisenden Wasserpumpe (9), welche saugseitig mit dem in den Abwasserschacht (1) gelangten Regenwasser in Verbindung steht,
• und einer Entlastungsleitung (11), an welche die Wasserpumpe (9) druckseitig anschließt und welche aus dem Abwasserschacht (1) geführt ist.

## Beschreibung

Die Erfindung betrifft einen Abwasserschacht, durch den eine Abwasser-Hauptleitung führt.

In der Praxis tritt häufig das Problem auf, dass bei starken Niederschlägen die Abwasserleitung sowie Schachtbauwerke einen so hohen Füllstand aufweisen, dass sich ein Wasserspiegel einstellt, der höher liegt als Austrittsöffnungen einer mit der Abwasser-Hauptleitung verbundenen Hauskanalisation innerhalb eines Hauses. Beispielsweise können im Kellerboden Abflüsse vorgesehen sein oder es können Sanitäreinrichtungen wie Duschen oder Toiletten im Keller vorgesehen sein, welche jeweils derartige Austrittsöffnungen der Hauskanalisation darstellen, so dass hier die niedrigsten Austrittsöffnungen der Hauskanalisation vorliegen, durch welche das Wasser aus der Hauskanalisation ins Haus gelangt.

Im Rahmen des vorliegenden Vorschlags wird davon ausgegangen, dass die normale Durchströmung der Regenwasser- und Abwasserleitungen vom Haus zu einem öffentlichen Abwasserkanal verläuft. Mit "stromabwärts" von einem Referenzpunkt ist nachfolgend daher eine Stelle bezeichnet, die im Vergleich zu dem Referenzpunkt weiter in dieser normalen Durchströmungsrichtung liegt, also näher zu dem öffentlichen Abwasserkanal als der Referenzpunkt.

Der Erfindung liegt die Aufgabe zugrunde, einen Abwasserschacht dahingehend auszugestalten, dass auch bei Niederschlags-Großereignissen - wie Starkregen - eine Überflutung des Hauses durch aus den Austrittsöffnungen der Hauskanalisation austretendes Wasser vermieden werden kann. Weiterhin liegt der Neuerung die Aufgabe zugrunde, eine Schachtanordnung unter Einbeziehung eines derartigen Abwasserschachtes anzugeben, die unter Verhinderung der Überflutung des Hauses eine Ableitung auftretender Niederschlagsmengen ermöglicht.

Diese Aufgabe wird durch einen Abwasserschacht mit den Merkmalen des Anspruchs 1 und eine Schachtanordnung mit den Merkmalen des Anspruchs 5 gelöst.

Die Erfindung schlägt mit anderen Worten vor, als erste wesentliche Maßnahme im Abwasserschacht eine Rückstauklappe vorzusehen, welche bei ansteigendem Abwasserspiegel automatisch schließt, so dass aus dem öffentlichen Abwasserkanal kein Abwasserrückstau durch die Abwasser-Hauptleitung zum Haus und dort durch die niedrigsten Austrittsöffnungen in das Haus gelangen kann. Durch diese erste Maßnahme ist gewährleistet, dass kein verschmutztes, beispielsweise mit Fäkalien belastetes, Abwasser aus dem öffentlichen Abwasserkanal ins Haus gelangen kann.

Die Rückstauklappe befindet sich allerdings stromabwärts von der Stelle, wo das Regenwasser in die Abwasser-Hauptleitung gelangt. Eine Überflutung des Hauses mit klarem Wasser, nämlich Regenwasser, soll jedoch ebenfalls zuverlässig vermieden werden. Häufig schließen die Regenwasserleitungen eines Hauses noch vor dem erwähnten Abwasserschacht an die Abwasser-Hauptleitung an. Die Abwasser-Hauptleitung selbst stellt in diesen Fällen die Leitung dar, welche Regenwasser in den Abwasserschacht führt, da sie beim Eintritt in den Abwasserschacht sowohl Abwasser als auch Regenwasser führt. Alternativ kann eine eigene Regenwasserleitung vorgesehen sein, welche das Regenwasser in den Abwasserschacht führt und welche dort in die Abwasser-Hauptleitung mündet, und zwar stromaufwärts von der Rückstauklappe.

Die im Abwasserschacht geschlossene Rückstauklappe würde daher bewirken, dass Regenwasser nicht in die öffentliche Kanalisation abfließen kann, sondern sich in den Regenwasser-Fallrohren bis maximal zur Höhe der Dachrinnen zurückstaut. Somit könnte dieses aufsteigende Regenwasser nach dem Prinzip der kommunizierenden Röhren innerhalb der Abwasser-Hauptleitung zwischen Haus und Abwasserschacht ebenfalls ansteigen und aus den Austrittsöffnungen der Hauskanalisation austreten.

Daher schlägt die Erfindung als zweite wesentliche Maßnahme vor, dass in dem Abwasserschacht eine Wasserpumpe vorgesehen ist, welche das bei geschlossener Rückstauklappe in dem Abwasserschacht ansteigende Wasser abpumpt, und zwar mittels einer Entlastungsleitung, welche das Wasser aus dem Abwasserschacht herausführt.

Die Erfindung geht dabei von der Überlegung aus, dass der Abwasserschacht problemlos zugänglich ist, so dass hier mit möglichst geringem finanziellem und technischem Aufwand ein Punkt geschaffen werden kann, der vorteilhaft geodätisch möglichst niedrig liegt, nämlich niedriger als die tiefsten Austrittsöffnungen der Hauskanalisation, und an dem wirkungsvoll eine Überflutung des Hauses verhindert werden kann.

### Dabei sind grundsätzlich zwei Installationsvarianten möglich:

Vielfach ist ein Abwasserschacht ohnehin bereits vorhanden, und es schließen eine oder mehrere Regenwasserleitungen stromaufwärts von dem Abwasserschacht an die Abwasser-Hauptleitung an. In diesem Fall stellt die Nachrüstung des Abwasserschachtes mit der Rückstauklappe, der Wasserpumpe und der Entlastungsleitung eine einfache und preisgünstige bauliche Maßnahme dar, welche keine Erdarbeiten erfordert.

Falls allerdings eine oder mehrere Regenwasserleitungen ohnehin bereits in den Abwasserschacht geführt sind, stellt die Anordnung der Rückstauklappe stromabwärts von deren Einmündung in die Abwasser-Hauptleitung sicher, dass das Regenwasser bei einem Niederschlags-Großereignis den öffentlichen Abwasserkanalnetz nicht belastet, denn es wird durch die geschlossene Rückstauklappe von dem Abwasserkanal getrennt und durch die Entlastungsleitung abgeleitet und z. B. versickert.

Durch die gute Zugänglichkeit des Abwasserschachtes ist die vorschlagsgemäße Installation der einzelnen Komponenten problemlos möglich. Die mit solchen Umbauten verbundenen Staub- und Lärmbelästigungen erfolgen außerhalb des Hauses und auch die Verlegung der neu zu verlegenden Entlastungsleitung kann vergleichsweise problemlos erfolgen, verglichen beispielsweise mit einer Anordnung vergleichbarer technischer Einrichtungen innerhalb des Hauses, beispielsweise wenn Rückstauklappe, Pumpe und Entlastungsleitung im Bereich des Abflusses in einem Keller angeordnet werden sollten.

Vorteilhaft kann, wenn eine separate Regenwasserleitung vorgesehen ist, diese im Abwasserschacht in die Abwasser-Hauptleitung münden, so dass bei normalen Niederschlagsereignissen und entsprechend problemlos zu bewältigenden Niederschlagsmengen das Regenwasser in an sich bekannter Weise durch die Abwasser-Hauptleitung abgeführt werden kann. Geodätisch oberhalb dieser Mündung ist die Ansaugöffnung der Wasserpumpe angeordnet, so dass bei steigendem Wasserspiegel, beispielsweise wenn die Rückstauklappe bereits geschlossen ist, die Wasserpumpe automatisch aktiviert werden kann, beispielsweise mittels eines Schwimmerschalters oder in ansonsten an sich bekannter Weise.

Vorteilhaft kann die das Regenwasser führende Abwasser-Hauptleitung oder die ggfs. vorgesehene separate Regenwasserleitung stromaufwärts von der Rückstauklappe einen Abzweig aufweisen, der in Strömungsverbindung mit der Wasserpumpe steht. Es kann sich dabei im einfachsten Fall um einen in die jeweilige Leitung eingesetzten T-Stutzen handeln, so dass bei normalem Füllstand dieser Leitung das Wasser durch die Leitung fließt. Bei geschlossener Rückstauklappe und entsprechend ansteigendem Wasserspiegel innerhalb dieser Leitung hingegen tritt das Regenwasser durch den T-Stutzen, der frei endet, in den Abwasserschacht ein, wo es abgepumpt wird. Auf diese Weise wird eine sehr preisgünstige und mit handelsüblichen Bauteilen herzustellende Anordnung geschaffen, die zuverlässig funktioniert.

Grundsätzlich kann die Wasserpumpe an die das Regenwasser führende Leitung angeschlossen sein und das Regenwasser aus dieser Leitung abpumpen. Dabei sind jedoch starke Füllstandsschwankungen dieser Leitung zu erwarten. Der im Vergleich zur Leitung sehr viele größere Innendurchmesser des Abwasserschachtes bewirkt einen vergleichsweise sehr viel langsameren Anstieg des Wasserspiegels als innerhalb der Leitung, so dass die Pumpensteuerung vereinfacht wird und Ein- und Abschaltvorgänge der Wasserpumpe nicht hochfrequent hektisch, sondern in vergleichsweise größeren, die Wasserpumpe schonenden Intervallen erfolgen können.

Die Anordnung des Abwasserschachtes im Verbund mit der Hauskanalisation kann vorteilhaft so ausgelegt sein, dass die Abwasser-Hauptleitung vom Haus zum außerhalb des Hauses gelegenen Abwasserschacht geführt ist und wobei wenigstens eine Regenwasserleitung vom Haus zu der Abwasser-Hauptleitung bzw. zu dem Abwasserschacht verläuft. Mehrere Regenfallrohre des Hauses können zu dieser wenigstens einen Regenwasserleitung zusammengeführt sein. Alternativ jedoch können mehrere Regenwasserleitungen vom Haus zu mehreren getrennten Mündungsstellen verlaufen, wo sie in die Abwasser-Hauptleitung bzw. in den Abwasserschacht münden. Weiterhin ist bei der neuerungsgemäß vorgeschlagenen Schachtanordnung vorgesehen, dass die Entlastungsleitung von der Wasserpumpe ins Freie geführt ist, wo sie außerhalb der Hauskanalisation mündet. In einfachster Ausgestaltung kann die Entlastungsleitung als Schlauchleitung ausgestaltet sein, die irgendwo im Garten des Hauses endet, so dass das austretende Wasser versickert.

Vorteilhaft kann die Ansaugöffnung der Wasserpumpe wenigstens 30 cm tiefer angeordnet sein als die tiefste offene Mündung der Hauskanalisation, so dass aufgrund dieser geodätischen Höhendifferenz sichergestellt ist, dass das bei geschlossener Rückstauklappe im Abwasserschacht aufsteigende Wasser zuverlässig abgepumpt wird, bevor es eine Höhe erreicht, die nach dem Prinzip der kommunizierenden Röhren innerhalb des Hauses dazu führen könnte, dass Wasser aus der tiefsten offenen Mündung der Hauskanalisation austreten kann.

Vorteilhaft kann die Rückstauklappe elektromotorisch betätigt sein und zur Energieversorgung des Elektromotors an das öffentliche Stromnetz angeschlossen sein. Auf diese Weise wird eine grundsätzlich zuverlässige Energieversorgung für die Funktionsfähigkeit der Rückstauklappe ermöglicht.

Sollte bei starken Unwettern die elektrische Versorgung durch das öffentliche Stromnetz nicht sichergestellt sein, so kann die Funktionsfähigkeit der elektromotorisch betätigten Rückstauklappe vorteilhaft dadurch sichergestellt sein, dass ein Energiespeicher zur Energieversorgung des Elektromotors vorgesehen ist, wobei eine Schaltung vorgesehen ist, die bei Ausfall der öffentlichen Stromversorgung auf den Energiespeicher umschaltet. Es kann sich dabei um einen vergleichsweise klein dimensionierten und preisgünstigen Energiespeicher handeln, wenn der Elektromotor mit entsprechenden Getriebemitteln auf die Rückstauklappe einwirkt, so dass auch bei vergleichsweise geringer Antriebsleistung hohe Schließkräfte - und dementsprechend eine zuverlässige Dichtheit - der Rückstauklappe gewährleistet werden können.

Bei geschlossener Rückstauklappe wird sowohl das Regenwasser als auch das vom Haus zum Abwasserschacht gelangende Abwasser durch die Entlastungsleitung gefördert. Dieses Mischwasser ins Freie zu fördern und ggfs. zu versickern, stellt einen zunächst überraschenden Vorschlag dar. Der vorliegende Vorschlag geht jedoch davon aus, dass bei einem Niederschlags-Großereignis das Abwasser durch die erheblichen Regenwassermengen so stark verdünnt wird, dass weder technische Probleme für die betroffenen Komponenten auftreten, wie z. B. für die Wasserpumpe, noch gesundheitliche, z. B. hygienische Probleme auftreten.

Insbesondere geht der vorliegende Vorschlag davon aus, dass die Abwasserkonzentration in dem durch die Entlastungsleitung geförderten Mischwasser erheblich geringer ist als dies der Fall wäre, wenn die Feuerwehr den Keller des Hauses auspumpen würde, nachdem der Keller ohne eine vorhandene Rückstauklappe von einem Abwasser-Regenwassergemisch überflutet worden wäre, oder nachdem der Keller bei einer vorhandenen Rückstauklappe mit Regenwasser überflutet worden wäre, welches durch im Keller befindliche Gegenstände oder Chemikalien wie Öle, Farben, Salze oder dergleichen belastet wäre.

Vorteilhaft kann allerdings eine Signaleinrichtung vorgesehen sein, welche zur Anzeige der Stellung der Rückstauklappe dient, wobei die Signaleinrichtung in dem Haus angeordnet ist, dem die vorschlagsgemäße Installation des Abwasserschachtes zugeordnet ist, welches also die Hauskanalisation aufweist, an welche der vorschlagsgemäß ausgestaltete Abwasserschacht angeschlossen ist. Bei Signalisierung, dass sich Rückstauklappe in ihrer Schließstellung befindet, können sich die Bewohner des Hauses bemühen, die in die Abwasser-Hauptleitung abgegebene Abwassermenge gering zu halten.

Die Signaleinrichtung kann durch eine Anlagensteuerung aktiviert werden, welche beispielsweise auch die Schließung der Rückstauklappe auslöst. Vorteilhaft kann jedoch ein Sensor zur Erfassung der Stellung der Rückstauklappe vorgesehen sein, so dass eine Signalisierung nur erfolgt, wenn die Rückstauklappe tatsächlich geschlossen ist. Zudem ermöglicht der Sensor eine Überwachung der Anlage, wenn beispielsweise verglichen werden kann, ob ein manuell oder automatisch gegebener Schließimpuls auch tatsächlich zum Schließen der Rückstauklappe führt.

Ein Ausführungsbeispiel der Erfindung wird anhand der rein schematischen Darstellungen nachfolgend näher erläutert. Dabei zeigt
- Fig. 1: einen Einblick in einen neuerungsgemäß ausgestalteten Abwasserschacht, und
- Fig. 2: einen mit Fig. 1 vergleichbaren Einblick in denselben Abwasserschacht, vor der neuerungsgemäßen Ausgestaltung.

In den Zeichnungen ist ein Abwasserschacht 1 dargestellt, der aufgrund seines Nenndurchmessers von beispielsweise 1000 mm begehbar ist und hierzu Trittstufen 2 aufweist.

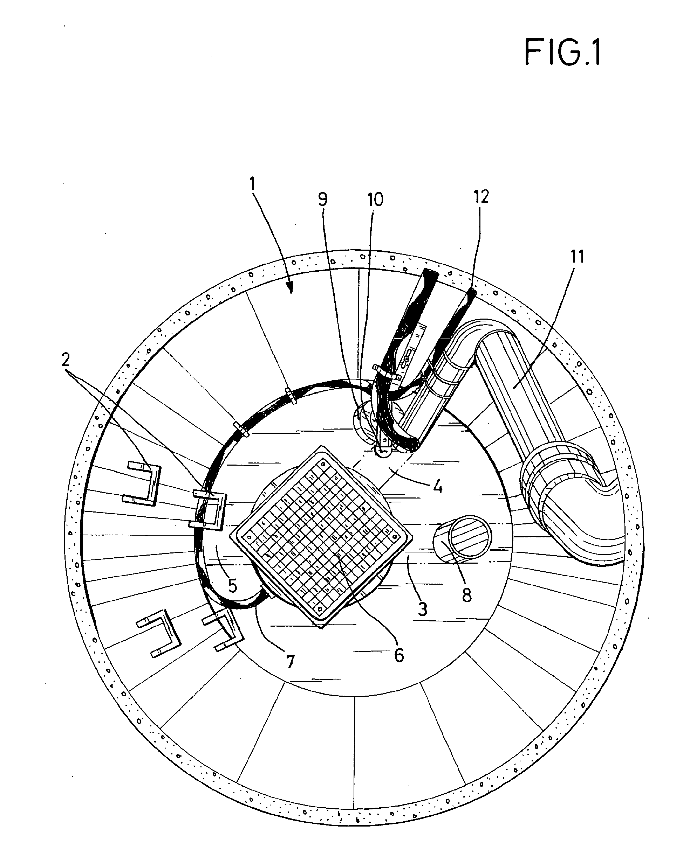

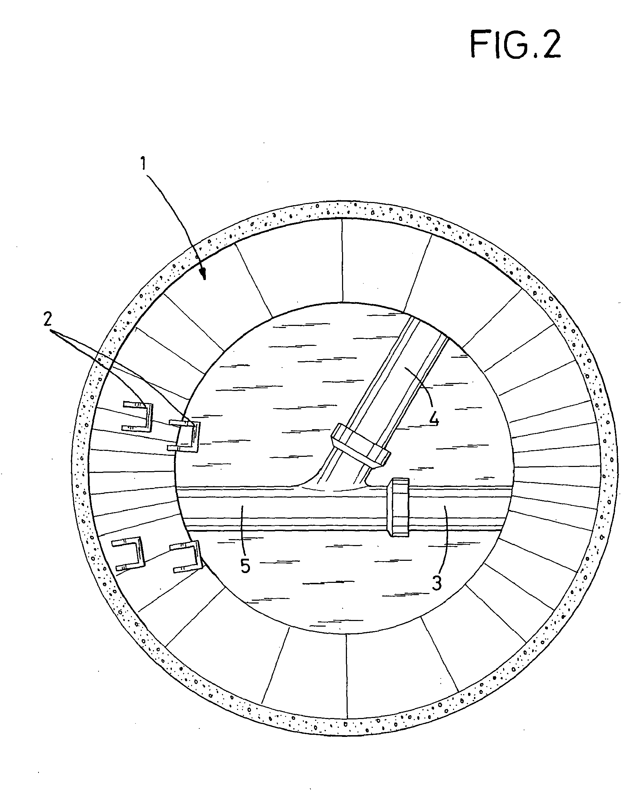

Wie Fig. 2 zeigt, führt eine Regenwasserleitung 3 in den Abwasserschacht 1, weiterhin führt in den Abwasserschacht 1 eine Abwasser-Hauptleitung 4, von der zudem ein Rohrleitungsabschnitt 5 ersichtlich ist, durch welchen die Abwasser-Hauptleitung 4 aus dem Abwasserschacht 1 herausgeführt ist. Ausgehend von dieser vorgefundenen Situation wird der Abwasserschacht 1 neuerungsgemäß wie anhand von Fig. 1 erläutert ausgestaltet:

Eine Rückstauklappe 6, von der lediglich die obere Abdeckung ersichtlich ist, ist in die Abwasser-Hauptleitung 1 eingesetzt und zwar in den Rohrleitungsabschnitt 5, also stromabwärts von der Stelle, an welcher die Regenwasserleitung 3 in die Abwasser-Hauptleitung 4 mündet. Die Rückstauklappe 6 ist elektromotorisch betätigt, so dass eine entsprechende elektrische Zuleitung 7 vorgesehen ist.

In die Regenwasserleitung 3 ist ein Abzweig eingesetzt, der einen frei mündenden Austrittsstutzen 8 aufweist, welcher oberhalb der Berme des Abwasserschachtes 1 frei und offen mündet. Ist bei entsprechend großen Niederschlagsereignissen die Rückstauklappe 6 geschlossen, so läuft das vom Haus gelangende Regenwasser durch die Regenwasserleitung 3 bis in den Abwasserschacht 1, wo es aufgrund der geschlossenen Rückstauklappe 6 nicht weiter über die Abwasser-Hauptleitung 4, insbesondere deren Rohrleitungsabschnitt 5 in die Kanalisation abfließen kann. Stattdessen steigt der Regenwasserpegel innerhalb der regenwasserführenden Rohrleitungen an, bis das Regenwasser aus dem Austrittsstutzen 8 austritt und das Innere des Abwasserschachtes 1 überflutet. Aufgrund des großen Innendurchmessers des Abwasserschachtes 1 erfolgt dieser Regenwasser-Pegelanstieg vergleichsweise langsam und da die Mündungsöffnung des Austrittsstutzens 8 geodätisch erheblich niedriger angeordnet ist als die tiefste Austrittsöffnung der Kanalisationsleitungen innerhalb des angeschlossenen Hauses, tritt innerhalb des Hauses zunächst kein Wasser aus den Austrittsöffnungen aus, um beispielsweise Kellerräume des Hauses zu überschwemmen.

Der im Inneren des Abwasserschachtes 1 langsam ansteigende Regenwasserpegel führt dazu, dass eine Wasserpumpe 9 automatisch eingeschaltet wird, beispielsweise mittels eines Schwimmerschalters 10, wobei anstelle des Schwimmerschalters 10 jedoch auch andere Einschaltsensoren für die Wasserpumpe 9 bzw. eine entsprechend anders ausgestaltete Wasserpumpe mit entsprechenden Einschaltsensoren verwendet werden kann.

Die Wasserpumpe 9 ist an eine Entlastungsleitung 11 angeschlossen, so dass das von der Wasserpumpe 9 aus dem Abwasserschacht 1 geförderte Regenwasser den Abwasserschacht 1 über die Entlastungsleitung 11 verlässt und beispielsweise in einer Gartenanlage des mit dem Abwasserschacht 1 verbundenen Hauses versickert werden kann.

Mit 12 ist in Fig. 1 eine Rohrleitung gekennzeichnet, durch welche beispielsweise Elektrokabel in den Abwasserschacht 1 geführt sind, beispielsweise zur Energieversorgung der Rückstauklappe 6 und der Wasserpumpe 9, sowie gegebenenfalls in Form von Signal- und Steuerkabeln, so dass beispielsweise innerhalb des Hauses eine Überwachung der im Abwasserschacht 1 installierten Anlage möglich ist sowie einzelne Funktionen dieser Anlage aus dem Haus heraus gesteuert werden können. Insbesondere kann im Haus eine Signaleinrichtung vorgesehen sein, die bei geschlossener Rückstauklappe 6 deren Schließstellung signalisiert.

In Fig. 1 ist gestrichelt der Verlauf der Regenwasserleitung 3, der Abwasser-Hauptleitung 4 und des Rohrleitungsabschnittes 5 eingezeichnet, wobei die neu in dem Abwasserschacht 1 installierte Berme so hoch angeordnet ist, dass die ursprünglich aus Fig. 2 ersichtlichen Rohrleitungen durch das neue Niveau der Berme verdeckt sind.

Abweichend von dem dargestellten Ausführungsbeispiel kann eine ganz ähnliche Installation vorgesehen sein, wenn der Abwasserschacht 1 lediglich von einer einzigen Leitung durchquert wird, nämlich von der Abwasser-Hauptleitung 4, die bereits sowohl Abwasser als auch Regenwasser führt, wenn sie in den Abwasserschacht 1 einmündet. In diesem Fall ist keine separate, in den Abwasserschacht 1 verlaufende Regenwasserleitung vorgesehen, und der Abzweig mit dem Austrittsstutzen 8 ist stromaufwärts von der Rückstauklappe 6 in der Abwasser-Hauptleitung 4 vorgesehen.

## Patentansprüche

1. Abwasserschacht (1), mit
■ einer durch den Abwasserschacht (1) verlaufenden, Abwasser führenden Abwasser-Hauptleitung (4),
welche wenigstens Abwasser in den Abwasserschacht (1) einführt und sowohl Abwasser als auch Regenwasser aus dem Abwasserschacht (1) herausführt,
■ einer Regenwasser in den Abwasserschacht (1) führenden Leitung,
■ einer die Abwasser-Hauptleitung (4) automatisch entweder freigebenden oder versperrenden Rückstauklappe (6),
welche dort in der Abwasser-Hauptleitung (4) vorgesehen ist, wo diese sowohl Abwasser als auch Regenwasser führt,
■ einer eine Saugseite und eine Druckseite aufweisenden Wasserpumpe (9), welche saugseitig mit dem in den Abwasserschacht (1) gelangten Regenwasser in Verbindung steht,
■ und einer Entlastungsleitung (11), an welche die Wasserpumpe (9) druckseitig anschließt und welche aus dem Abwasserschacht (1) geführt ist.

2. Abwasserschacht nach Anspruch 1, **dadurch gekennzeichnet, dass** eine Regenwasserleitung (3) innerhalb des Abwasserschachtes (1) in die Abwasser-Hauptleitung (4) mündet und geodätisch oberhalb dieser Mündung eine Ansaugöffnung der Wasserpumpe (9) angeordnet ist.

3. Abwasserschacht nach Anspruch 1 oder 2, **dadurch gekennzeichnet, dass** die das Regenwasser führende Leitung stromaufwärts von der Rückstauklappe (6) innerhalb des Abwasserschachtes (1) einen Abzweig aufweist, der in Strömungsverbindung mit der Wasserpumpe (9) steht.

4. Abwasserschacht nach Anspruch 3, **dadurch gekennzeichnet, dass** der Abzweig zu einem frei in den Abwasserschacht (1) mündenden Austrittsstutzen (8) führt.

5. Schachtanordnung einer Hauskanalisation, mit einem Abwasserschacht (1) nach einem der vorhergehenden Ansprüche, wobei
■ die Abwasser-Hauptleitung (4) vom Haus zum Abwasserschacht (1) geführt ist,
■ Regenwasser durch eine vom Haus zu dem Abwasserschacht (1) verlaufende Leitung geführt ist,
■ und die Entlastungsleitung (11) von der Wasserpumpe (9) ins Freie geführt ist, derart, dass sie außerhalb der Hauskanalisation mündet.

6. Schachtanordnung nach Anspruch 5, **dadurch gekennzeichnet, dass** die Ansaugöffnung der Wasserpumpe (9) wenigstens 30 cm geodätisch tiefer angeordnet ist als die geodätisch tiefste offene Mündung der Hauskanalisation.

7. Schachtanordnung nach Anspruch 5 oder 6, **dadurch gekennzeichnet, dass** die Rückstauklappe (6) elektromotorisch betätigt ist und zur Energieversorgung des Elektromotors an das öffentliche Stromnetz angeschlossen ist.

8. Schachtanordnung nach Anspruch 7, **gekennzeichnet durch** einen Energiespeicher zur Energieversorgung des Elektromotors, sowie **durch** eine Schaltung, welche bei einem Ausfall des öffentlichen Stromnetzes auf den Energiespeicher umschaltet.

9. Schachtanordnung nach einem der Ansprüche 5 bis 8, **gekennzeichnet durch** eine Signaleinrichtung zur Anzeige der Stellung der Rückstauklappe (6), wobei die Signaleinrichtung in dem die Hauskanalisation aufweisenden Haus angeordnet ist.

10. Schachtanordnung nach Anspruch 9, **gekennzeichnet durch** einen Sensor zur Erfassung der Stellung der Rückstauklappe (6), wobei der Sensor mit der Signaleinrichtung wirksam verbunden ist, derart, dass bei geschlossener Rückstauklappe (6) die Signaleinrichtung diese Schließstellung der Rückstauklappe (6) im Haus signalisiert.
